# FASCICULE DE BREVET EUROPEEN

(11) **EP 3 451 880 B1**
(45) Date de publication et mention de la délivrance du brevet: **20.01.2021**
(21) Numéro de dépôt: 17725699.7
(22) Date de dépôt: 28.04.2017
(51) Int. Cl.: A47J 36/32

(54) **APPAREIL DE CUISSON ET PROCEDE D'UTILISATION DE L'APPAREIL DE CUISSON**
KOCHVORRICHTUNG UND VERFAHREN ZUR VERWENDUNG DER KOCHVORRICHTUNG
COOKING APPARATUS AND METHOD OF USING THE COOKING APPARATUS

(30) Priorité: 03.05.2016 FR 1653988
(43) Date de publication de la demande: 13.03.2019
(73) Titulaire: SEB S.A., 69130 Ecully (FR)
(72) Inventeur: BLOND, Laurent, 21200 Beaune (FR); VOLATIER, Sébastien, 21000 Dijon (FR); LETERRIER, Thomas, 50000 Saint Lo (FR)
(74) Mandataire: SEB Développement
(86) Numéro de dépôt international: PCT/FR2017/051029
(87) Numéro de publication internationale: WO 2017/191396

(56) Documents cités:
- WO-A1-2015/110626
- DE-A1-102009 058 258
- US-A- 5 710 409
- US-A1- 2013 003 490
- US-A1- 2013 176 116

## Description

La présente invention concerne un appareil de cuisson et un procédé d'utilisation de l'appareil de cuisson.

Il est connu de disposer d'un appareil de cuisson comprenant une unité de commande et de contrôle permettant à un utilisateur de choisir un programme de cuisson et de la lancer. Le document US2013003490 décrit un exemple d'un tel appareil.

Pour ce faire, l'unité de commande et de contrôle comprend une interface utilisateur ménagée dans l'appareil de cuisson. Cette disposition donne satisfaction en ce que différents programmes de cuisson sont proposés à l'utilisateur selon l'aliment à cuire. Ainsi l'utilisateur n'a pas à réguler manuellement la température de cuisson au cours de la cuisson.

Cependant l'unité de commande et de contrôle comprend un nombre limité de programmes de cuisson. Il est alors délicat d'ajouter de nouveaux programmes de cuisson.

En effet, il peut être nécessaire d'ajouter ou de remplacer une mémoire de l'unité de commande et de contrôle comprenant les paramètres de cuisson correspondant aux programmes de cuisson.

Ce type d'intervention sur l'appareil nécessite un certain temps, ce qui empêche l'utilisateur se rendant compte qu'il manque un programme en mémoire de l'appareil de cuisson de trouver une solution immédiate pour cuire un aliment particulier.

La présente invention vise à résoudre tout ou partie des inconvénients mentionnés ci-dessus.

A cet effet, la présente invention concerne un appareil de cuisson comprenant :
- un système de cuisson présentant un emplacement de cuisson agencé pour recevoir un aliment et comprenant un élément chauffant agencé pour chauffer ledit aliment,
- une unité de communication apte à échanger des informations avec un terminal distant selon un protocole de communication, l'unité de communication étant agencée pour recevoir une information de paramétrage de cuisson comprenant un ensemble de coefficients correspondant à une évolution temporelle de la température,
- une unité de commande et de contrôle du système de cuisson comprenant un processeur agencé pour réguler une température de cuisson de l'élément chauffant pendant une durée de cuisson selon une consigne de cuisson, l'unité de commande et de contrôle comprenant une interface utilisateur pourvue d'une commande de sélection d'une catégorie d'aliment parmi une pluralité de catégories d'aliments, l'unité de commande et de contrôle étant agencée pour être disposée en une première configuration dans laquelle ladite consigne de cuisson est fonction de la catégorie d'aliment sélectionnée, ou alternativement en une seconde configuration dans laquelle ladite consigne de cuisson est fonction de l'ensemble de coefficients reçu par l'unité de communication.

L'appareil de cuisson est ainsi apte à fonctionner indépendamment selon la première configuration. Il n'est en effet pas nécessaire d'avoir un terminal pour sélectionner une catégorie d'aliment à faire cuire.

Selon un aspect de l'invention, la commande de sélection est en outre agencée pour la sélection d'un état de cuisson souhaitée, ladite consigne de cuisson étant en outre fonction de ladite sélection d'un état de cuisson souhaitée en première configuration.

La première configuration offre ainsi comme possibilité à un utilisateur de sélectionner une catégorie d'aliment et un état de cuisson souhaitée.

Le choix pour l'utilisateur est cependant limité aux catégories d'aliments enregistrées en mémoire du processeur. Ainsi la seconde configuration permet d'étendre le nombre de catégories d'aliments en utilisant l'information de paramétrage de cuisson reçue par l'unité de communication.

Il est donc possible en seconde configuration de faire cuire des aliments compris dans une catégorie non définie et selon un état de cuisson souhaitée non défini dans la mémoire du processeur de l'appareil de cuisson.

Il n'est donc pas nécessaire de changer l'unité de commande et de contrôle à chaque ajout d'une catégorie d'aliment.

De plus le fait de pouvoir changer de configuration offre une souplesse d'utilisation : l'appareil de cuisson fonctionne aussi bien seul que connecté à un terminal distant.

L'ensemble de coefficients fait que l'information de paramétrage de cuisson est une information succincte sous forme de paramètres de cuisson qui sont pris en compte par le processeur en seconde configuration.

Selon un aspect de l'invention chaque catégorie d'aliment est définie par un ensemble de coefficients enregistré en mémoire du processeur.

Le processeur définit la consigne de cuisson de manière identique à partir d'un ensemble de coefficients que l'appareil de cuisson soit en première configuration ou en seconde configuration. La cuisson suit un programme dont les paramètres sont des coefficients compris en mémoire du processeur en première configuration ou des coefficients téléchargés en seconde configuration.

Selon un aspect de l'invention, l'interface utilisateur comprend un indicateur de connexion agencé pour émettre un signal à destination de l'utilisateur lorsque l'unité de communication est apte à échanger des informations avec le terminal distant selon un protocole de communication.

Cette disposition permet de savoir si la communication entre l'appareil de cuisson et le terminal est établie. L'utilisateur sait donc qu'il est possible de passer de la première configuration - fonctionnement en mode non connecté - à la seconde configuration - fonctionnement en mode connecté.

Selon un aspect de l'invention, l'interface utilisateur comprend une commande de commutation pour le passage de la première configuration à la seconde configuration.

L'information de paramétrage de cuisson peut être reçue à tout moment par l'unité de communication. Cette information de paramétrage de cuisson est ensuite conservée en mémoire du processeur.

L'utilisateur peut ensuite selon son choix utiliser la commande de sélection pour démarrer une cuisson selon la première configuration ou utiliser la commande de commutation pour démarrer une cuisson selon la seconde configuration.

La commande commutation apparait donc à l'utilisateur comme une catégorie d'aliment supplémentaire par rapport à la pluralité de catégories d'aliments de la commande de sélection.

Selon un aspect de l'invention, le processeur est agencé pour appliquer une fonction de vérification à l'information de paramétrage de cuisson dont le résultat est soit un indicateur de conformité soit un indicateur d'anomalie de ladite information de paramétrage de cuisson.

La fonction de vérification est donc une sécurité permettant au processeur de déterminer s'il peut utiliser l'information de paramétrage de cuisson reçue ou non. Cette disposition évite l'utilisation d'une information de paramétrage de cuisson erronée.

Selon un aspect de l'invention, l'unité de communication est agencée pour recevoir et enregistrer en mémoire du processeur au moins deux informations de paramétrage de cuisson.

Cette disposition permet de ne pas avoir à charger à chaque fois une information de paramétrage de cuisson si cette dernière est utilisée régulièrement.

Selon un aspect de l'invention, chaque information de paramétrage de cuisson est relative à un programme de cuisson, c'est-à-dire à une catégorie d'aliment. Typiquement cette catégorie d'aliment n'est pas comprise dans la pluralité de catégories d'aliments enregistrée en mémoire du processeur.

Selon un autre aspect de l'invention, chaque information de paramétrage de cuisson est relative à un état de cuisson souhaitée tel que saignant, à point ou bien cuit.

Ainsi le fait que le processeur puisse comprendre en mémoire plusieurs informations de paramétrage de cuisson permet de cuire deux aliments relatifs à un même programme de cuisson en même temps et ce même si leurs états de cuissons souhaitées sont différents.

Un premier utilisateur peut donc obtenir un aliment saignant et un deuxième utilisateur obtenir le même aliment bien cuit en une seule cuisson. En effet, l'aliment bien cuit devra simplement être laissé plus longtemps dans l'emplacement de cuisson.

Selon un aspect de l'invention, l'unité de communication est agencée pour émettre une information de retour à destination du terminal, l'information de retour comprenant une indication de la température de cuisson et/ou de la durée de cuisson restante et/ou une notification d'intervention.

Cette disposition permet une surveillance à distance de la cuisson de l'aliment. En particulier l'utilisateur peut connaître la durée de cuisson restante avant d'aller chercher son aliment cuit. L'utilisateur n'est donc pas obligé de rester à côté de l'appareil de cuisson ou de connaitre au préalable la durée de cuisson pour savoir à quel moment il doit revenir vers l'appareil de cuisson.

Selon un aspect de l'invention, l'unité de communication est agencée pour envoyer une pluralité d'informations de retour, un intervalle de temps défini séparant l'envoi de deux informations consécutives.

Cette disposition permet une économie d'énergie dans le sens où l'intervalle de temps peut être élevé entre deux envois.

Selon un aspect de l'invention, l'unité de communication est agencée pour envoyer l'information de retour suivant un ordre ponctuel du processeur.

Cette disposition permet à l'appareil de mesure de communiquer au terminal l'information de retour le plus rapidement possible de manière ponctuelle. Cette disposition est utile lorsqu'un défaut de fonctionnement est détecté par le processeur.

Selon un aspect de l'invention, la notification d'intervention comprend un message à destination de l'utilisateur, par exemple « retourner l'aliment dans l'emplacement de cuisson » ou un rapport d'anomalie comme « un aliment est dans l'emplacement de cuisson pendant la préchauffe ».

Selon un aspect de l'invention, l'unité de commande et de contrôle de l'appareil de cuisson est agencée pour procéder à un préchauffage de l'élément chauffant selon la consigne de cuisson et émettre une information d'état de la préchauffe.

En d'autres termes, l'état de préchauffe renseigne l'utilisateur pour savoir si il peut disposer son aliment à cuire dans l'emplacement de cuisson de l'appareil de cuisson.

Le préchauffage dépend du type d'aliment qui va être cuit puisqu'il dépend de la consigne de cuisson.

Selon un aspect de l'invention, l'information d'état de la préchauffe comprend une indication de la durée de préchauffe restante.

Cette disposition permet de savoir quelle est l'attente avant de pouvoir disposer l'aliment à cuire dans l'appareil de cuisson.

Selon un aspect de l'invention, l'unité de commande et de contrôle est agencée pour émettre l'information d'état de la préchauffe à destination d'un avertisseur de l'interface utilisateur et/ou à destination du terminal via l'unité de communication.

Lorsque l'utilisateur est à proximité de l'appareil de cuisson, l'avertisseur lui permet de savoir à quel moment le préchauffage est terminé et lorsqu'il peut mettre son aliment à chauffer dans l'appareil de cuisson.

Si l'utilisateur est à distance de l'appareil mais a avec lui son terminal, il recevra également une notification lui indiquant qu'il peut mettre son aliment dans l'appareil de cuisson.

Selon un aspect de l'invention, le processeur de l'unité de commande et de contrôle est agencé pour émettre une information d'état de la cuisson comprenant une indication sur la durée de cuisson restante selon la consigne de cuisson.

Cette disposition permet d'avertir l'utilisateur du temps restant avant que son aliment soit cuit.

Selon un aspect de l'invention, l'interface utilisateur est agencée pour afficher un contenu relatif à ladite information de cuisson et/ou dans lequel l'unité de communication est agencée pour émettre ladite information de cuisson selon le protocole de communication.

Au cours de la cuisson de l'aliment l'utilisateur peut ainsi être averti du temps de cuisson restant par l'intermédiaire de l'interface utilisateur de l'appareil de cuisson et/ou par son terminal.

Selon un aspect de l'invention, ladite durée de cuisson correspond à une durée pendant laquelle un élément chauffant de l'appareil de cuisson est activé pour cuire un aliment. De préférence, une durée de maintien en température succède à la durée de cuisson. Cette disposition permet à l'aliment de ne pas refroidir après la fin de la cuisson.

Selon un aspect de l'invention, l'appareil de cuisson comprend un capteur destiné à mesurer au moins une grandeur physique relative à un aliment disposé dans l'emplacement de cuisson, la consigne de cuisson étant fonction de ladite grandeur physique mesurée.

Outre l'information de paramétrage de cuisson utilisée pour déterminer la consigne de cuisson, le processeur est agencé pour tenir compte de ladite grandeur physique mesurée.

Ainsi la catégorie de l'aliment sélectionnée au niveau de la commande de sélection ou l'information de paramétrage de cuisson renseignent quant au type d'aliment à cuire et le capteur quant à la taille ou la quantité dudit aliment à cuire.

Le processeur peut donc avec cet ensemble d'informations déterminer la consigne de cuisson adéquate.

Selon un aspect de l'invention, la grandeur physique est une surface occupée par un aliment et/ou une épaisseur de l'aliment. En d'autres termes, la surface occupée par l'aliment correspond à une variation de température due à l'effusivité thermique de l'aliment mesurée par un capteur de température.

Cette disposition permet d'avoir une connaissance complète de l'aliment destiné à être cuit : le type d'aliment et la grandeur physique. Le processeur peut ainsi déterminer grâce à l'information de paramétrage de cuisson et la valeur de ladite grandeur physique quelle est la consigne de cuisson adéquate à appliquer à l'aliment.

Selon un aspect de l'invention, l'interface utilisateur comprend en outre une commande d'adaptation thermique, la consigne de cuisson étant fonction d'un état de ladite commande d'adaptation thermique.

Selon un aspect de l'invention, un état de la commande d'adaptation thermique correspond à un état congelé de l'aliment. Dans ce cas, le processeur prend en compte cet état de départ de l'aliment pour déterminer la consigne de cuisson à appliquer.

Selon un aspect de l'invention, la consigne de cuisson comprend une ou plusieurs plages temporelles, chacune définie par une température de cuisson cible et une durée. En particulier, la préchauffe correspond à une plage temporelle de ladite consigne de cuisson. La durée de cuisson correspond à une seule plage temporelle couvrant la totalité de la durée de cuisson ou à une succession de plages temporelles couvrant cette même durée de cuisson.

La présente invention concerne également un procédé d'utilisation d'un appareil de cuisson tel que décrit précédemment comprenant les étapes suivantes :
- envoi d'une information de paramétrage de cuisson comprenant un ensemble de coefficients à une unité de communication de l'appareil de cuisson selon un protocole de communication,
- disposition en une seconde configuration d'une unité de commande et de contrôle d'un système de cuisson de l'appareil de cuisson dans laquelle ladite une consigne de cuisson est déterminée par un processeur de l'unité de commande et de contrôle en fonction de l'ensemble de coefficients correspondant à une évolution temporelle de la température et reçu par l'unité de communication,
- lancement de la consigne de cuisson.

Selon un aspect de l'invention, le lancement de la consigne de cuisson peut être validé par une interaction avec l'interface utilisateur ou par une validation au niveau du terminal.

La présente invention concerne en outre un produit programme d'ordinateur comprenant des instructions de code agencées pour mettre en œuvre les étapes d'un procédé tel que décrit ci-avant lorsque ledit programme est exécuté sur un processeur d'un terminal agencé pour échanger des informations selon un protocole de communication avec une unité de communication d'un appareil de cuisson tel que décrit précédemment.

Selon un aspect de l'invention, le produit programme d'ordinateur est agencé sous forme d'application téléchargeable sur un terminal.

La présente invention concerne en outre un terminal agencé pour échanger des informations selon un protocole de communication avec une unité de communication d'un appareil de cuisson tel que décrit précédemment et comprenant en mémoire les instructions de code d'un produit programme d'ordinateur tel que décrit ci-avant et agencé pour exécuter un tel produit programme d'ordinateur.

La présente description concerne également un procédé de configuration d'un appareil de cuisson par un terminal apte à échanger des informations selon un protocole de communication avec l'appareil de cuisson, le procédé n'étant pas couvert par les revendications, le procédé de configuration comprenant les étapes suivantes :
- création et/ou sélection d'un programme de cuisson, ledit programme de cuisson comprenant une relation entre une durée de cuisson et une température de cuisson, et/ou
- création et/ou sélection d'un état de la cuisson souhaitée correspondant à un état d'avancement de mise en œuvre dudit programme de cuisson,
- détermination et/ou sélection d'une information de paramétrage de cuisson à partir et/ou en correspondance avec ledit programme de cuisson et/ou de l'état de cuisson souhaitée,
- envoi de ladite information de paramétrage de cuisson à destination de l'appareil de cuisson.

Selon un aspect du procédé, ladite durée de cuisson correspond à une durée pendant laquelle un élément chauffant de l'appareil de cuisson est activé pour cuire un aliment. De préférence, une durée de maintien en température succède à la durée de cuisson. Cette disposition permetà l'aliment de ne pas refroidir après la fin de la cuisson.

Le procédé de configuration permet à un utilisateur de créer et/ou sélectionner une information de paramétrage de cuisson qui permettra à l'appareil de cuisson de déterminer et/ou sélectionner une consigne de cuisson correspondante.

La consigne de cuisson correspond à une adaptation de la relation entre la durée de cuisson et la température de cuisson du programme de cuisson et éventuellement de l'état de cuisson souhaitée.

Ladite adaptation est nécessaire pour que l'appareil de cuisson procède à une cuisson selon le programme de cuisson et/ou l'état de cuisson souhaitée.

Cette disposition est utile car il est possible de définir une consigne de cuisson non comprise en mémoire de l'appareil de cuisson et l'appliquer à la cuisson d'un aliment.

Lorsqu'un utilisateur désire procéder à la cuisson d'un aliment selon une nouvelle consigne de cuisson, il n'est donc pas nécessaire de modifier ou de remplacer l'appareil de cuisson.

Par ailleurs la commande et le contrôle de la cuisson sont gérées localement par une unité de commande et de contrôle de l'appareil de cuisson. Le procédé de configuration consiste à déterminer et/ou sélectionner des paramètres de cuisson qui seront appliqués ensuite par l'appareil de cuisson à un aliment à cuire.

L'unité de commande fait en sorte que la consigne de cuisson soit appliquée.

L'information de paramétrage de cuisson est déterminée par le terminal, par exemple par l'application d'une fonction de calcul, ou est sélectionnée en mémoire du terminal parmi une pluralité d'informations de paramétrage de cuisson enregistrées.

Le terminal est agencé pour qu'un lien existe en mémoire entre chaque information de paramétrage de cuisson enregistrée et un programme de cuisson défini et/ou un état de cuisson souhaitée défini.

Selon un aspect du procédé l'information de paramétrage de cuisson comprend un ensemble de coefficients correspondant à une évolution temporelle de la température.

L'unité de commande et de contrôle de l'appareil de cuisson comprend un processeur apte à interpréter cet ensemble de coefficients et à déterminer une consigne de cuisson correspondante.

Selon un aspect le procédé de configuration d'un appareil de cuisson par un terminal comprend en outre les étapes suivantes :
- création et/ou sélection d'un profil utilisateur comprenant un identifiant utilisateur,
- affectation de ladite information de paramétrage de cuisson audit profil utilisateur.

Cette disposition permet d'affecter l'information de paramétrage de cuisson à un profil utilisateur. Ainsi il est possible de mémoriser l'information de paramétrage de cuisson de l'utilisateur pour ensuite la réutiliser.

Cette disposition est utile si un utilisateur veut disposer d'une information de paramétrage de cuisson personnalisée, par exemple si le programme de cuisson est relatif à un aliment particulier ou si il désire un état d'avancement de cuisson particulier par exemple entre à point et bien cuit.

Ainsi l'utilisateur n'a pas à recréer à chaque fois une nouvelle information de paramétrage de cuisson : celle qu'il a créé auparavant et qu'il a affecté à son profil utilisateur peut être réutilisée.

Selon un aspect du procédé, un premier profil utilisateur est affecté à une première information de paramétrage de cuisson et un deuxième profil utilisateur est affecté à une deuxième information de paramétrage de cuisson.

Le procédé de configuration permet ainsi de définir plusieurs informations de paramétrage de cuisson chacune étant affectée à un utilisateur. Il est donc possible de configurer plusieurs cuissons préalablement à l'envoi à l'appareil de cuisson.

Egalement, cette disposition est utile lorsque le premier utilisateur et le deuxième utilisateur choisissent un même programme de cuisson. Dans ce cas, l'appareil de cuisson est agencé pour permettre la cuisson simultanée d'un premier aliment du premier utilisateur et d'un deuxième aliment du deuxième utilisateur.

Les états de cuissons souhaitées peuvent être différents pour le premier utilisateur et le deuxième utilisateur. Dans ce cas, le premier aliment et le deuxième aliment ne seront pas retirés en même temps de l'appareil de cuisson après cuisson.

Selon un aspect, le procédé de configuration comprend une étape de réception par le terminal d'au moins un programme de cuisson et/ou d'au moins un état de cuisson souhaitée et/ou d'au moins une information de paramétrage de cuisson en provenance d'un serveur.

Les programmes de cuissons ainsi que les états de cuissons souhaités généralement utilisés sont à disposition des utilisateurs et peuvent être transférés sur le terminal.

Il n'est ainsi pas nécessaire que l'utilisateur crée un programme de cuisson ou un état de cuisson souhaitée.

Il en est de même pour les informations de paramétrage de cuisson liées aux programmes de cuisson et états de cuissons souhaitées qui sont connus du serveur. L'étape de détermination consiste ainsi pour le terminal à sélectionner l'information de paramétrage qu'il contient déjà en mémoire ou de la télécharger à partir du serveur.

De manière alternative, la détermination peut consister en un calcul réalisé par le terminal. Cette disposition est intéressante en l'absence de connexion avec le serveur.

La présente invention concerne également un produit programme d'ordinateur comprenant des instructions de code agencées pour mettre en œuvre les étapes d'un procédé de configuration tel que décrit précédemment lorsque ledit programme est exécuté sur un processeur d'un terminal agencé pour échanger des informations selon un protocole de communication avec une unité de communication d'un appareil de cuisson tel que décrit précédemment.

Selon un aspect de l'invention, le produit programme d'ordinateur est agencé sous forme d'application téléchargeable sur un terminal.

La présente invention concerne en outre un terminal agencé pour échanger des informations selon un protocole de communication avec une unité de communication d'un appareil de cuisson tel que décrit précédemment et comprenant en mémoire les instructions de code d'un produit programme d'ordinateur tel que décrit ci-dessus et agencé pour exécuter un tel produit programme d'ordinateur.

De toute façon l'invention sera bien comprise à l'aide de la description qui suit en référence aux dessins schématiques annexés représentant, à titre d'exemple non limitatif, une forme d'exécution de cet appareil de cuisson et ce procédé d'utilisation de l'appareil de cuisson.
Figure 1 est une vue en perspective d'un appareil de cuisson et d'un terminal.
Figure 2 est une vue de face de l'interface utilisateur de l'appareil de cuisson.
Figure 3 est une vue de côté de l'appareil de cuisson ouvert.
Figure 4 est un ordinogramme d'un procédé d'utilisation de l'appareil de cuisson.
Figure 5 est une vue schématique de l'appareil de cuisson, du terminal et d'un serveur.
Figure 6 est un ordinogramme d'un procédé de configuration de l'appareil de cuisson par le terminal.

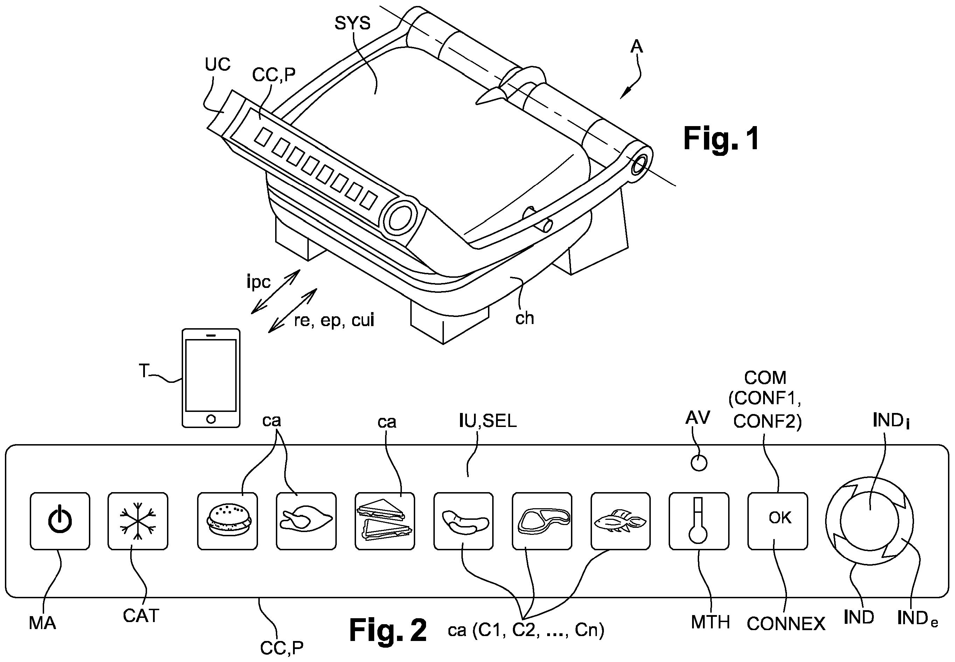

Comme illustré aux figures 1 à 3, un appareil de cuisson A comprend un système de cuisson SYS pourvu d'un élément chauffant ch et d'un emplacement de cuisson emp pour un aliment ali.

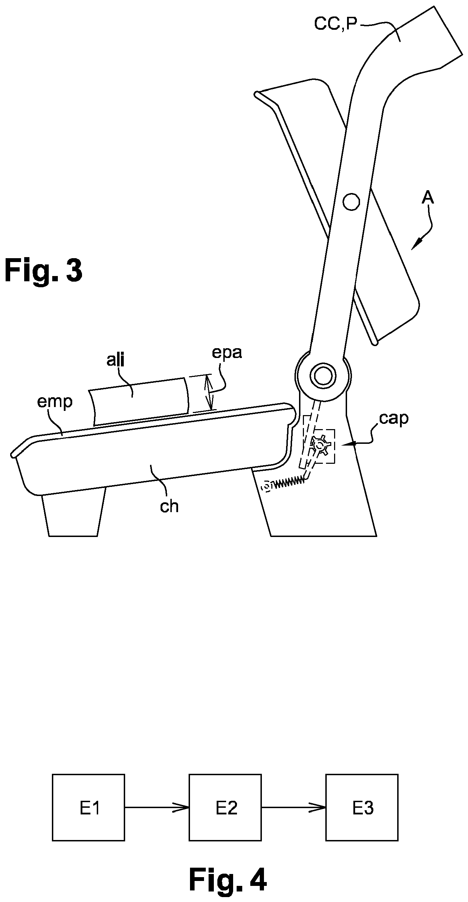

A la figure 1, l'appareil de cuisson A est fermé: c'est la position de cuisson et à la figure 3 l'appareil de cuisson A est ouvert: c'est la position pour disposer ou enlever un aliment ali de l'emplacement de cuisson emp.

L'appareil de cuisson A comprend une unité de communication UC pourvue d'une carte de communication agencée pour communiquer avec un terminal T distant selon un protocole de communication. Le protocole de communication est protocole de communication sans fil par ondes radio.

L'appareil de cuisson A comprend également une unité de commande et de contrôle CC agencée pour commander et contrôler le système de cuisson SYS.

Pour le contrôle du système de cuisson SYS, l'appareil de cuisson A comprend également un cateur cap apte à mesurer un grandeur physique.

Ce capteur cap peut être un capteur cap d'épaisseur agencé pour mesurer une épaisseur de l'aliment ali disposé dans l'emplacement de cuisson emp ou un capteur cap de contrainte agencé pour mesurer une charge ou une masse de l'aliment ali disposé dans l'emplacement de cuisson emp.

Comme illustré aux figures 1 et 2, l'unité de commande et de contrôle CC comprend un processeur P doté d'une mémoire et agencé pour réguler une température de cuisson Te de l'élément chauffant ch pendant une durée de cuisson t selon une consigne de cuisson co.

L'unité de commande et de contrôle CC comprend une interface utilisateur IU pourvue d'une commande de sélection SEL d'une catégorie d'aliment ca parmi une pluralité de catégories d'aliments ca.

En pratique l'utilisateur reconnait la catégorie d'aliment ca avec le pictogramme affiché et peut sélectionner une catégorie d'aliment ca en appuyant sur ledit pictogramme.

L'interface utilisateur IU comprend une commande d'adaptation thermique CAT qui est une option que peut choisir un utilisateur en appuyant dessus. Cette option peut être sélectionnée lorsque l'aliment ali déposé est congelé pour permettre au processeur P d'adapter la consigne de cuisson co.

L'interface utilisateur IU comprend également un bouton marche-arrêt MA, un avertisseur AV agencé pour s'allumer lorsque la préchauffe est terminée, un indicateur de cuisson IND et un bouton de réglage manuel du thermostat MTH.

L'indicateur de cuisson IND comprend une partie circulaire externe INDe pourvue de plusieurs portions de couleurs différentes, chaque couleur correspondant à un état de cuisson comme « saignant », « à point » ou « bien cuit ».

Le passage d'une couleur à une autre peut être progressif à l'image d'un arc en ciel. Une partie centrale INDi de l'indicateur de cuisson IND présente une couleur qui change en fonction de l'état de cuisson de l'aliment ali. Le changement de couleur est également progressif.

L'utilisateur peut donc comparer la couleur de la partie centrale INDi aux couleurs de la partie externe INDe et déterminer visuellement l'état de cuisson de son aliment.

Par exemple, l'utilisateur peut voir que la couleur centrale correspondant à un état « à point » assez proche de l'état « bien cuit ».

Cette disposition permet aussi de faire cuire deux aliments ali identiques en même temps dans l'emplacement de cuisson et de retirer un premier aliment ali avant le deuxième si le premier aliment doit être moins cuit que le second.

Le bouton de réglage manuel du thermostat MTH est une alternative à la commande de sélection SEL.

Si l'utilisateur appuie sur le bouton de réglage manuel du thermostat MTH, il peut régler lui-même une température de cuisson Te manuellement.

Pour l'utilisation de l'appareil de cuisson A de manière autonome, c'est-à-dire sans utiliser de terminal T distant, l'utilisateur sélectionne une catégorie d'aliment ca avec la commande de sélection SEL ou le bouton de réglage manuel du thermostat MTH.

Si l'aliment à cuire est congelé, l'utilisateur appuie également sur la commande d'adaptation thermique CAT.

A partir de ce moment, une préchauffe commence et l'utilisateur est averti de la fin de la préchauffe lorsque l'avertisseur AV s'allume. A ce moment l'utilisateur ouvre l'appareil de cuisson A et dispose son aliment ali dans l'emplacement de cuisson emp puis referme l'appareil de cuisson A.

L'indicateur de cuisson IND change alors progressivement de couleur pour indiquer à l'utilisateur l'évolution de la cuisson. Le processeur P est agencé pour déterminer cette couleur à partir de la consigne de cuisson co et de la mesure réalisé par le capteur cap. L'appreil de cuisson peut également se baser sur une température mesurée par un autre capteur dédié au niveau de l'emplacement de cuisson emp.

Le mode de fonctionnement décrit ci-avant correspond à une première configuration CONF1 de l'appareil de cuisson A. Selon cette première configuration CONF1, l'appareil de cuisson A est apte à fonctionner de manière totalement autonome, c'est-à-dire sans terminal T.

Le processeur P est agencé pour déterminer les paramètres de cuisson à partir d'un ensemble de coefficients C1, C2, ...Cn. Ces coefficients C1, C2, ...Cn sont des valeurs utilisées par le processeur P pour déterminer la consigne de cuisson co.

Le consigne de cuisson co correspond à une ou plusieurs plages temporelles, la ou chacune étant définie par une température de cuisson Te cible et une durée de cuisson t cible.

Ainsi une consigne de cuisson co pour un aliment ali particulier peut par exemple être une première température Te élevée pendant cinq minutes puis une température Te moins élevée pendant dix minutes.

En fonctionnement selon la première configuration CONF1, chaque catégorie d'aliment ca que l'utilisateur peut sélectionner par la commande de sélection SEL correspond à un ensemble de coefficient C1, C2, ...Cn particulier.

Le processeur P applique ensuite le même calcul de détermination de la consigne de cuisson co à partir de chaque ensemble de coefficient C1, C2, ...Cn.

Le processeur P est également agencé pour vérifier que chaque ensemble de coefficient C1, C2, ...Cn qu'il reccoit a une cohérence propre et qu'il ne s'agit pas de coefficients C1, C2, ...Cn déterminés aléatoirement.

Pour ce faire, le processeur P est agencé pour appliquer une fonction de vérification fv aux coefficients C1, C2, ...Cn d'un ensemble de coefficients C1, C2, ...Cn et obtenir un résultat r. Il peut s'agir d'une somme de certains coefficients C1, C2, ...Cn.

Le processeur P est également agencé pour analyser le résultat r et déterminer à partir de ce résultat r un indicateur de conformité ou un indicateur d'anomalie. Si aucune anomalie n'est détectée, le processeur P peut commencer la cuisson par la préchauffe.

Comme illustré aux figures 1, 4 et 5, l'appareil de cuisson A est également agencé pour fonctionner selon une seconde configuration CONF2 dans laquelle le terminal T internvient.

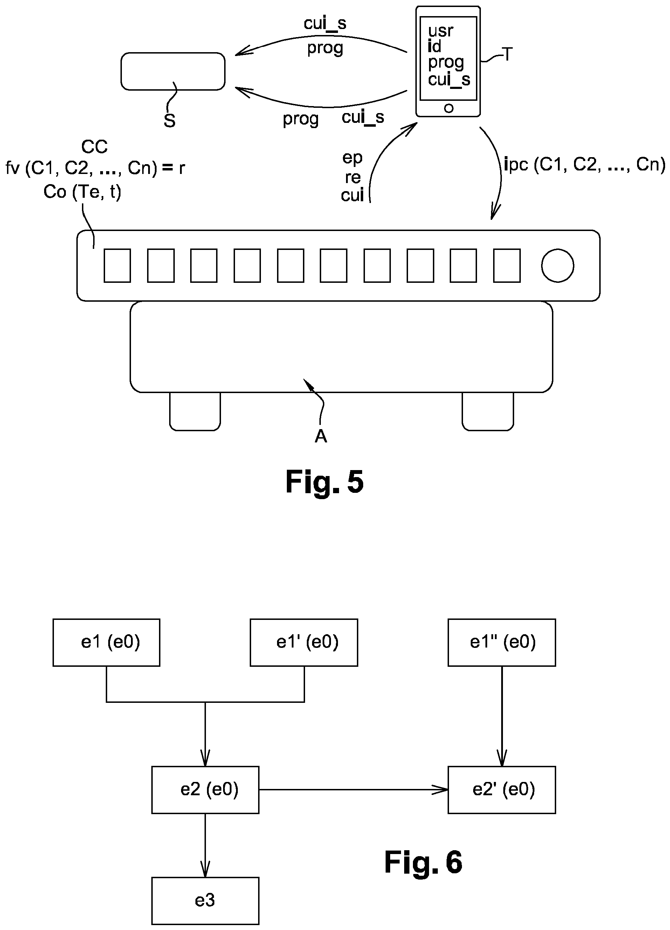

Selon cette seconde configuration CONF2, un procédé de configuration de l'appareil de cuisson A par le terminal T selon la figure 6 peut être effectué.

Le terminal T comprend également un processeur apte à exécuter un produit programme d'ordinateur sous forme d'application téléchargeable mettant en œuvre les étapes du procédé configuration.

Une étape e1 du procédé de configuration est une étape de création et/ou sélection d'un programme de cuisson prog, ledit programme de cuisson prog comprenant une relation entre une durée de cuisson t et une température de cuisson Te.

Une étape e1', qui peut être effectuée indépendamment de l'étape e1 est une étape de création et/ou sélection d'un état de la cuisson souhaitée cui_s correspondant à un état d'avancement de mise en œuvre dudit programme de cuisson prog. Il peut par exemple s'agir d'un état comme « à point » ou bien cuit ».

Cette étape e1' peut être considérée comme optionnelle. L'avantage est que l'utilisateur aura un retour au niveau de l'affichage de son terminal T lorsque l'état de cuisson souhaitée sera atteint. A defaut d'avoir réalisé cette étape l'utilisateur n'aura qu'une indication de l'avancement de la cuisson.

Une étape e1" peut également être réalisée indépendamment des étapes e1 et e1'. Il s'agit d'une étape e1" de création et/ou sélection d'un profil utilisateur usr comprenant un identifiant utilisateur id.

Avant ou parallement à la réalisation des étapes e1, e1' et e1", une étape optionnelle e0 consiste en la réception par le terminal T d'au moins un programme de cuisson prog et/ou d'au moins un état de cuisson souhaitée cui_s et/ou d'au moins une information de paramétrage de cuisson ipc en provenance d'un serveur S et/ou d'au moins un profil utilisateur usr.

Un profil utilisateur usr reçu peut être associé à l'au moins un programme de cuisson prog et/ou l'au moins un état de cuisson souhaitée cui_s et/ou l'au moins une information de paramétrage de cuisson ipc en provenance d'un serveur S.

Cette étape explique également comment la sélection du programme de cuisson prog et/ou de l'état de cuisson souhaitée cui_s peut être effectuée à partir d'informations en provenance du serveur S.

Une synchronisation avec le serveur S est également possible par l'envoi d'un programme de cuisson prog et/ou d'un état de cuisson souhaitée cui_s et/ou d'un profil utilisateur usr correspondant.

Une étape e2 consiste ensuite en la détermination par le terminal T d'une information de paramétrage de cuisson ipc à partir dudit programme de cuisson prog et/ou de l'état de cuisson souhaitée cui_s.

L'information de paramétrage de cuisson ipc déterminée comprend un ensemble de coefficients C1, C2, ...Cn, ledit ensemble étant interprétable par le processeur P de l'appareil de cuisson A pour déterminer une consigne de cuisson co.

L'information de paramétrage de cuisson ipc comprend également de manière optionnelle une information relative à l'état de cuisson souhaitée cui_s.

Une étape e2' succédant à l'étape e2 consiste en l'affectation de ladite information de paramétrage de cuisson ipc audit profil utilisateur usr. Cette disposition permet notamment de prévoir plusieurs informations de paramétrage de cuisson ipc pour un utilisateur usr ou pour plusieurs utilisateurs usr.

Ces informations de paramétrage de cuisson ipc peuvent être enregistrées en mémoire du processeur du terminal T ou en mémoire du serveur S puisque le serveur S est apte à échanger des informations avec le terminal T.

Enfin le procédé de configuration se termine par une étape e3 d'envoi de ladite information de paramétrage de cuisson ipc à destination de l'appareil de cuisson A par le terminal T. Il est également possible d'envoyer plusieurs informations de paramétrage de cuisson ipc à destination de l'appareil de cuisson A.

L'appareil de cuisson est apte à recevoir plusieurs information de paramétrage de cuisson ipc dans le but d'effectuer plusieurs cuissons successives ou deux cuissons simultanées de deux aliments identiques.

Lorsque l'appareil de cuisson A reçoit une information de paramétrage de cuisson ipc, il peut être en première configuration CONF1. Pour passer en seconde configuration CONF2, l'interface utilisateur comprend une commande de commutation COM.

Lorsque l'utilisateur appuie sur la commande de commutation COM, l'appareil de cuisson A passe en seconde configuration CONF2 et la préchauffe commence.

Le processeur P avait auparavent déterminé une consigne de cuisson co en fonction des coefficients C1, C2, ...Cn de l'information de paramétrage de cuisson ipc reçue après avoir vérifié la conformité des coefficients C1, C2, ...Cn avec la fonction de vérification fv. Cette détermination peut être réalisé dès que l'appareil de cuisson A recoit une information ou rapidement avant le démarrage de la préchauffe lorsque l'utilisateur appuie sur la commande de commutation COM.

L'interface utilisateur IU comprend également un indicateur de connexion CONNEX agencé pour émettre un signal lumineux lorsque l'unité de communication est apte à échanger des informations avec le terminal distant selon un protocole de communication.

Cette disposition permet d'informer l'utilisateur qu'il est possible d'appuyer sur la commande de commutation COM.

La suite de la cuisson se déroule de manière identique en seconde configuration CONF2 : la préchauffe commence et l'avertiseur AV s'allume lorsque celle-ci est terminée.

En seconde configuration CONF2, l'unité de communication UC est agencée pour envoyer à destination du terminal T une information de l'état de la préchauffe ep comprenant une indication de la durée de préchauffe restante, cette information étant déterminée par le processeur P.

Cette disposition est utile car en seconde configuration CONF2, l'utilisateur n'est pas obligé de rester à proximité de l'appareil de cuisson A car il est averti par son terminal T de la fin de la préchauffe.

L'utilisateur dispose alors son aliment ali dans l'emplacement de cuisson emp puis referme l'appareil de cuisson A.

De même que pendant la préchauffe, l'unité de communication UC est agencée pour envoyer lors de la cuisson une information de l'état de cuisson cui déterminée par le processeur P.

Cette information peut correspondre à la couleur de l'indicateur de cuisson IND et/ou à une indication de la fin de la cuisson si l'information de paramétrage de cuisson ipc envoyée comprenait une information relative à l'état de la cuisson souhaitée cui_s.

L'utilisateur est ainsi alterté par son terminal T de la fin de cuisson et n'est pas obligé de rester à proximité de l'appareil de cuisson A lors de la cuisson.

D'une manière plus générale en seconde configuration CONF2, l'appareil de cuisson A est agencé pour envoyer une information de retour re à destination du terminal T comprenant diverses rensignements concernant le fonctionnement de l'appareil de cuisson A.

L'information de retour re peut notamment comprendre une indication de la température de cuisson et/ou une notification d'intervention.

La notification d'intervention peut comprendre un message à destination de l'utilisateur, par exemple « retourner l'aliment dans l'emplacement de cuisson » ou un rapport d'anomalie comme « un aliment est dans l'emplacement de cuisson pendant la préchauffe ».

Egalement quand plusieurs utilisateurs ont chacun envoyé une information de paramétrage de cuisson ipc à l'appareil de cuisson A, cette information de retour re permet de savoir quel programme de cuisson prog a été lancé.

Il est également à remarquer que seule une information de paramétrage de cuisson ipc envoyée à destination de l'unité de communication UC permet à l'appareil de cuisson A d'effectuer sa cuisson.

En effet après l'envoi de cette information par le terminal T, la communication entre l'appareil de cuisson A et le terminal T peut être intérrompue sans que cela n'affecte la cuisson.

Cette diposition est utile car l'appareil de cuisson A est ainsi configuré pour recevoir au moins une information de paramétrage de cuisson ipc et la conserver en mémoire pour que le programme de cuisson prog correspondant soit effectué à plusieurs reprises sans qu'il soit nécécessire d'utiliser à nouveau le terminal T.

Le terminal T apparait donc comme une extension du processeur P de l'appareil de mesure A permettant de charger de nouveaux programmes de cuisson prog sans toutefois être dépendant de la bonne communication entre le terminal T et l'appareil de cuisson A.

Un utilisateur ne disposant pas de terminal ne sera pas pénalisé dans le sens où il pourra toujours utiliser l'appareil de cuisson.

Eventuellement le terminal T et l'appareil de cuisson A peuvent être agencés pour que le terminal T agisse comme une commande à distance du processeur P. Un utilisateur alors choisir l'ordre des programmes lancés.

Comme illustré à la figure 4, le terminal T est agencé pour réaliser les étapes d'un procédé d'utilisation de l'appareil de cuisson A. Selon une première étape le terminal procède à un envoi E1 d'une information de paramétrage de cuisson ipc comme détaillé ci-dessous.

Alternativement à ce qui est décrit ci-dessus le terminal T peut à distance procéder à une étape E2 de disposition en une seconde configuration CONF2 sans qu'il soit nécessaire d'appuyer sur la commande de commutation COM, puis une étape E3 de lancement de la consigne de cuisson co, notamment du démarrage du préchauffage.

Il est toutefois à remarquer que la consigne de cuisson co ainsi que la vérification des paramètres sont toujours réalisées par le processeur P de l'appareil de cuisson A. Ainsi l'appareil de cuisson A conserve son fonctionnement autonome, seules les commandes sont déportées.

Comme il va de soi, l'invention ne se limite pas à la seule forme d'exécution de cet appareil de cuisson et ce procédé d'utilisation de l'appareil de cuisson, décrits ci-dessus à titre d'exemple, elle en embrasse au contraire toutes les variantes de réalisation définies par les revendications.

## Revendications

1. Appareil de cuisson (A) comprenant :
- un système de cuisson (SYS) présentant un emplacement de cuisson (emp) agencé pour recevoir un aliment (ali) et comprenant un élément chauffant (ch) agencé pour chauffer ledit aliment (ali),
- une unité de communication (UC) apte à échanger des informations avec un terminal (T) distant selon un protocole de communication, l'unité de communication (UC) étant agencée pour recevoir une information de paramétrage de cuisson (ipc) comprenant un ensemble de coefficients (C1, C2,..., Cn) correspondant à une évolution temporelle de la température,
- une unité de commande et de contrôle (CC) du système de cuisson (SYS) comprenant un processeur (P) agencé pour réguler une température de cuisson (Te) de l'élément chauffant (ch) pendant une durée de cuisson (t) selon une consigne de cuisson (co),
l'unité de commande et de contrôle (CC) comprenant une interface utilisateur (IU) pourvue d'une commande de sélection (SEL) d'une catégorie d'aliment (ca) parmi une pluralité de catégories d'aliments (ca),
l'unité de commande et de contrôle (CC) étant agencée pour être disposée en une première configuration (CONF1) dans laquelle ladite consigne de cuisson (co) est fonction de la catégorie d'aliment (ca) sélectionnée,
ou alternativement en une seconde configuration (CONF2) dans laquelle ladite consigne de cuisson (co) est fonction de l'ensemble de coefficients (C1, C2,..., Cn) reçu par l'unité de communication (UC).

2. Appareil de cuisson (A) selon la revendication 1, dans lequel l'interface utilisateur (IU) comprend une commande de commutation (COM) pour le passage de la première configuration (CONF1) à la seconde configuration (CONF2).

3. Appareil de cuisson (A) selon l'une des revendications 1 ou 2, dans lequel le processeur (P) est agencé pour appliquer une fonction de vérification (fv) à l'information de paramétrage de cuisson (ipc) dont le résultat (r) est soit un indicateur de conformité soit un indicateur d'anomalie de ladite information de paramétrage de cuisson (ipc).

4. Appareil de cuisson (A) selon l'une des revendications 1 à 3, dans lequel l'unité de communication (UC) est agencée pour recevoir et enregistrer en mémoire du processeur (P) au moins deux informations de paramétrage de cuisson (ipc).

5. Appareil de cuisson (A) selon l'une des revendications 1 à 4 dans lequel l'unité de communication (UC) est agencée pour émettre une information de retour (re) à destination du terminal (T), l'information de retour (re) comprenant une indication de la température de cuisson (Te) et/ou de la durée de cuisson (t) restante et/ou une notification d'intervention.

6. Appareil de cuisson (A) selon l'une des revendications 1 à 5, dans lequel l'unité de commande et de contrôle (CC) de l'appareil de cuisson (A) est agencée pour procéder à un préchauffage de l'élément chauffant (ch) selon la consigne de cuisson (co) et émettre une information d'état de la préchauffe (ep).

7. Appareil de cuisson (A) selon la revendication 6 dans lequel l'information d'état de la préchauffe (ep) comprend une indication de la durée de préchauffe restante.

8. Appareil de cuisson (A) selon la revendication 6 ou 7, dans lequel l'unité de commande et de contrôle (CC) est agencée pour émettre l'information d'état de la préchauffe (ep) à destination d'un avertisseur (AV) de l'interface utilisateur (IU) et/ou à destination du terminal (T) via l'unité de communication (UC).

9. Appareil de cuisson (A) selon l'une des revendications 1 à 8, dans lequel le processeur (P) de l'unité de commande et de contrôle (CC) est agencé pour émettre une information d'état de la cuisson (cui) comprenant une indication sur la durée de cuisson restante selon la consigne de cuisson (co).

10. Appareil de cuisson (A) selon l'une des revendications 1 à 9, comprenant un capteur (cap) destiné à mesurer au moins une grandeur physique relative à un aliment disposé dans l'emplacement de cuisson (emp), la consigne de cuisson (co) étant fonction de ladite grandeur physique mesurée.

11. Appareil de cuisson (A) selon l'une des revendications 1 à 10, dans lequel l'interface utilisateur (IU) comprend en outre une commande d'adaptation thermique (CAT), la consigne de cuisson (co) étant fonction d'un état de ladite commande d'adaptation thermique (CAT).

12. Procédé d'utilisation d'un appareil de cuisson (A) selon l'une des revendications 1 à 11, comprenant les étapes suivantes :
- (E1) envoi d'une information de paramétrage de cuisson (ipc) comprenant un ensemble de coefficients (C1, C2,...,Cn) à une unité de communication (UC) de l'appareil de cuisson (A) selon un protocole de communication,
- (E2) disposition en une seconde configuration (CONF2) d'une unité de commande et de contrôle (CC) d'un système de cuisson (SYS) de l'appareil de cuisson (A) dans laquelle ladite une consigne de cuisson (co) est déterminée par un processeur (P) de l'unité de commande et de contrôle (CC) en fonction de l'ensemble de coefficients (C1, C2,...,Cn) correspondant à une évolution temporelle de la température et reçu par l'unité de communication (UC),
- (E3) lancement de la consigne de cuisson (co).

13. Produit programme d'ordinateur comprenant des instructions de code agencées pour mettre en œuvre les étapes d'un procédé selon la revendication 12 lorsque ledit programme est exécuté sur un processeur d'un terminal (T) agencé pour échanger des informations selon un protocole de communication avec une unité de communication (UC) d'un appareil de cuisson (A) selon l'une des revendications 1 à 11, lesdites informations comprenant au moins une information de paramétrage de cuisson (ipc) comprenant un ensemble de coefficients (C1, C2,..., Cn) correspondant à une évolution temporelle de la température.

14. Produit programme d'ordinateur selon la revendication 13 agencé sous forme d'application téléchargeable sur un terminal (T).

15. Terminal (T) agencé pour échanger des informations selon un protocole de communication avec une unité de communication (UC) d'un appareil de cuisson (A) selon l'une des revendications 1 à 11 et comprenant en mémoire les instructions de code d'un produit programme d'ordinateur selon l'une des revendications 13 ou 14 et agencé pour exécuter un tel produit programme d'ordinateur.

## Patentansprüche

1. Kocheinrichtung (A) umfassend:
- ein Kochsystem (SYS), das eine Kochstelle (emp) aufweist, die eingerichtet ist, um ein Lebensmittel (ali) aufzunehmen, und ein Heizelement (ch) umfasst, das eingerichtet ist, um das Lebensmittel (ali) aufzuwärmen,
- eine Kommunikationseinheit (UC), die geeignet ist, Informationen mit einem entfernten Endgerät (T) gemäß einem Informationsprotokoll auszutauschen, wobei die Kommunikationseinheit (UC) eingerichtet ist, um eine Kocheinstellinformation (ipc) zu empfangen, die eine Gesamtheit von Koeffizienten (C1, C2, ..., Cn) umfasst, die einer zeitlichen Entwicklung der Temperatur entsprechen,
- eine Befehls- und Steuereinheit (CC) des Kochsystems (SYS), umfassend einen Prozessor (P), der eingerichtet ist, um eine Kochtemperatur (Te) des Heizelements (ch) während einer Kochdauer (t) gemäß einer Kochanweisung (co) zu regulieren,
wobei die Befehls- und Steuereinheit (CC) eine Benutzeroberfläche (IU) umfasst, die mit einem Auswahlbefehl (SEL) einer Lebensmittelkategorie (ca) unter einer Vielzahl von Lebensmittelkategorien (ca) ausgestattet ist,
wobei die Befehls- und Steuereinheit (CC) eingerichtet ist, um in einer ersten Konfiguration (CONF1) angeordnet zu sein, in der die Kochanweisung (co) von der ausgewählten Lebensmittelkategorie (ca) abhängt,
oder alternativ in einer zweiten Konfiguration (CONF2), in der die Kochanweisung (co) von der Gesamtheit der von der Kommunikationseinheit (UC) empfangenen Koeffizienten (C1, C2, ..., Cn) abhängt.

2. Kocheinrichtung (A) nach Anspruch 1, wobei die Benutzeroberfläche (IU) einen Umwandlungsbefehl (COM) für den Übergang von der ersten Konfiguration (CONF1) zur zweiten Konfiguration (CONF2) umfasst.

3. Kocheinrichtung (A) nach einem der Ansprüche 1 oder 2, wobei der Prozessor (P) eingerichtet ist, um eine Überprüfungsfunktion (fv) an der Kocheinstellinformation (ipc) anzuwenden, deren Ergebnis (r) entweder eine Konformitätsangabe oder eine Anomalieangabe der Kocheinstellinformation (ipc) ist.

4. Kocheinrichtung (A) nach einem der Ansprüche 1 bis 3, wobei die Kommunikationseinheit (UC) eingerichtet ist, um vom Prozessor (P) mindestens zwei Kocheinstellinformationen (ipc) zu empfangen und im Speicher aufzuzeichnen.

5. Kocheinrichtung (A) nach einem der Ansprüche 1 bis 4, wobei die Kommunikationseinheit (UC) eingerichtet ist, um eine an das Endgerät (T) gerichtete Rückmeldeinformation (re) auszugeben, wobei die Rückmeldeinformation (re) eine Angabe der Kochtemperatur (Te) und/oder der verbleibenden Kochdauer (t) und/oder eine Eingreifbenachrichtigung umfasst.

6. Kocheinrichtung (A) nach einem der Ansprüche 1 bis 5, wobei die Befehls- und Steuereinheit (CC) der Kocheinrichtung (A) eingerichtet ist, um ein Vorwärmen des Heizelements (ch) gemäß der Kochanweisung (co) vorzunehmen und eine Information zum Vorwärmestand (ep) auszugeben.

7. Kocheinrichtung (A) nach Anspruch 6, wobei die Information zum Vorwärmestand (ep) eine Angabe der verbleibenden Vorwärmdauer umfasst.

8. Kocheinrichtung (A) nach Anspruch 6 oder 7, wobei die Befehls- und Steuereinheit (CC) eingerichtet ist, um die Information zum Vorwärmestand (ep) an einen Warnmelder (AV) der Benutzeroberfläche (IU) gerichtet und/oder an das Endgerät (T) gerichtet über die Kommunikationseinheit (UC) auszugeben.

9. Kocheinrichtung (A) nach einem der Ansprüche 1 bis 8, wobei der Prozessor (P) der Befehls- und Steuereinheit (CC) eingerichtet ist, um eine Information zum Kochstand (cui) auszugeben, die eine Angabe über die verbleibende Kochdauer gemäß der Anweisung (co) umfasst.

10. Kocheinrichtung (A) nach einem der Ansprüche 1 bis 9, umfassend einen Sensor (cap), der vorgesehen ist, um mindestens eine physische Größe in Bezug auf ein in der Kochstelle (emp) angeordnetes Lebensmittel zu messen, wobei die Kochanweisung (co) von der gemessenen physischen Größe abhängt.

11. Kocheinrichtung (A) nach einem der Ansprüche 1 bis 10, wobei die Benutzeroberfläche (IU) weiter einen Wärmeanpassungsbefehl (CAT) umfasst, wobei die Kochanweisung (co) vom Stand des Wärmeanpassungsbefehls (CAT) abhängt.

12. Verfahren zur Verwendung einer Kocheinrichtung (A) nach einem der Ansprüche 1 bis 11, umfassend die folgenden Schritte:
- (E1) Senden einer Kocheinstellinformation (ipc), die eine Gesamtheit von Koeffizienten (C1, C2, ..., Cn) umfasst, an eine Kommunikationseinheit (UC) der Kocheinrichtung (A) gemäß einem Kommunikationsprotokoll,
- (E2) Anordnen in einer zweiten Konfiguration (CONF2) einer Befehls- und Steuereinheit (CC) eines Kochsystems (SYS) der Kocheinrichtung (A), in der eine Kochanweisung (co) von einem Prozessor (P) der Befehls- und Steuereinheit (CC) in Abhängigkeit von der Gesamtheit der Koeffizienten (C1, C2, ..., Cn) bestimmt wird, die einer zeitlichen Entwicklung der Temperatur entsprechen und von der Kommunikationseinheit (UC) empfangen werden,
- (E3) Starten der Kochanweisung (co).

13. Computerprogrammprodukt, umfassend Codeinstruktionen, die eingerichtet sind, um die Schritte eines Verfahrens nach Anspruch 12 durchzuführen, wenn das Programm auf einem Prozessor eines Endgeräts (T) ausgeführt wird, das eingerichtet ist, um Informationen gemäß einem Kommunikationsprotokoll mit einer Kommunikationseinheit (UC) einer Kocheinrichtung (A) nach einem der Ansprüche 1 bis 11 auszutauschen, wobei die Informationen mindestens eine Kocheinstellinformation (ipc) umfassen, die eine Gesamtheit von Koeffizienten (C1, C2, ..., Cn) umfasst, die einer zeitlichen Entwicklung der Temperatur entsprechen.

14. Computerprogrammprodukt nach Anspruch 13, das in Gestalt einer auf ein Endgerät (T) herunterladebare Anwendung eingerichtet ist.

15. Endgerät (T), das eingerichtet ist, um Informationen gemäß einem Kommunikationsprotokoll mit einer Kommunikationseinheit (UC) einer Kocheinrichtung (A) nach einem der Ansprüche 1 bis 11 auszutauschen, und im Speicher Codeinstruktionen eines Computerprogrammprodukts nach einem der Ansprüche 13 oder 14 umfasst und eingerichtet ist, um ein solches Computerprogramprodukt auszuführen.

## Claims

1. Cooking apparatus (A) comprising:
- a cooking system (SYS) having a cooking site (emp) configured to receive a food (ali) and comprising a heating element (ch) configured to head said food (ali),
- a communication unit (UC) configured to exchange information with a remote terminal (T) according to a communication protocol, the communication unit (UC) being configured to receive a cooking parameterisation information item (ipc) comprising a set of coefficients (C1, C2, ..., Cn) corresponding to a time evolution of the temperature,
- a control and command unit (CC) of the cooking system (SYS) comprising a processor (P) configured to regulate a cooking temperature (Te) of the heating element (ch) for a cooking time (t) according to a cooking setpoint (co),
the control and command unit (CC) comprising a user interface (IU) provided with a selection command (SEL) for selecting a food category (ca) from among a plurality of food categories (ca),
the control and command unit (CC) being configured to be arranged in a first configuration (CONF1) in which the cooking setpoint (co) is dependent on the food category (ca) selected,
or alternatively in a second configuration (CONF2), in which said cooking setpoint (co) is dependent on the set of coefficients (C1, C2, ..., Cn) received by the communication unit (UC).

2. Cooking apparatus (A) according to claim 1, wherein the user interface (IU) comprises a switch command (COM) for switching from the first configuration (CONF1) to the second configuration (CONF2).

3. Cooking apparatus (A) according to one of claims 1 or 2, wherein the processor (P) is configured to apply a verification function (fv) to the cooking parameterisation information item (ipc), the result (r) of which is either a conformity indicator or an anomaly indicator for the said cooking parameterisation information item (ipc).

4. Cooking apparatus (A) according to one of claims 1 to 3, wherein the communication unit (UC) is configured to receive and save in a memory of the processor (P) at least two cooking parameterisation information items (ipc).

5. Cooking apparatus (A) according to one of claims 1 to 4, wherein the communication unit (UC) is configured to transmit a feedback information item (re) to the terminal (T), the feedback information item (re) comprising an indication of the cooking temperature (Te) and/or of the remaining cooking time (t) and/or an intervention notification.

6. Cooking apparatus (A) according to one of claims 1 to 5, wherein the control and command unit (CC) of the cooking apparatus (A) is configured to carry out a preheating of the heating element (ch) according to the cooking setpoint (co) and to transmit an information item on the preheating status (ep).

7. Cooking apparatus (A) according to claim 6, wherein the preheating status information item (ep) comprises an indication of the remaining preheating time.

8. Cooking apparatus (A) according to claim 6 or 7, wherein the control and command unit (CC) is configured to transmit the preheating status information item (ep) to an alert device (AV) of the user interface (IU) and/or to the terminal (T) via the communication unit (UC).

9. Cooking apparatus (A) according to one of claims 1 to 8, wherein the processor (P) of the control and command unit (CC) is configured to transmit a cooking information item (cui) comprising an indication of the remaining cooking time according to the cooking setpoint (co).

10. Cooking apparatus (A) according to one of claims 1 to 9, comprising a sensor (cap) configured to measure at least one physical volume relative to a food placed in the cooking site (emp), the cooking setpoint (co) being dependent on said physical volume measured.

11. Cooking apparatus (A) according to one of claims 1 to 10, wherein the user interface (IU) further comprises a thermal adaptation command (CAT), the cooking setpoint (co) being dependent on a status of said thermal adaptation command (CAT).

12. Method for using a cooking apparatus (A) according to one of claims 1 to 11, comprising the following steps:
- (E1) sending a cooking parameterisation information item (ipc) comprising a set of coefficients (C1, C2, ..., Cn) to a communication unit (UC) of the cooking apparatus (A) according to a communication protocol,
- (E2) placing a control and command unit (CC) of a cooking system (SYS) of the cooking apparatus (A) in a second configuration (CONF2) in which said cooking setpoint (co) is determined by a processor (P) of the control and command unit (CC) according to the set of coefficients (C1, C2, ..., Cn) corresponding to a time evolution of the temperature and received by the communication unit (UC),
- (E3) launching the cooking setpoint (co).

13. Computer program product comprising code instructions designed to implement the steps of a method according to claim 12 when said program is executed on a processor of a terminal (T) configured to exchange information according to a communication protocol with a communication unit (UC) of the cooking apparatus (A) according to one of claims 1 to 11, said information comprising at least one cooking parameterisation information item (ipc) comprising a set of coefficients (C1, C2, ..., Cn) corresponding to a time evolution of the temperature.

14. Computer program product according to claim 13, arranged as an application that can be downloaded to a terminal (T).

15. Terminal (T) configured to exchange information according to a communication protocol with a communication unit (UC) of a cooking apparatus (A) according to one of claims 1 to 11 and comprising in memory, code instruction of a computer program product according to one of claims 13 or 14 and configured to execute such a computer program product.
